## Europäisches Patentamt
## European Patent Office
## Office européen des brevets

(19)

(11) Veröffentlichungsnummer: **0 383 070**
**A2**

(12) **EUROPÄISCHE PATENTANMELDUNG**

(21) Anmeldenummer: **90101437.3**

(51) Int. Cl.5: **A61C 17/02**

(22) Anmeldetag: **25.01.90**

(30) Priorität: **13.02.89 DE 3904186**

(43) Veröffentlichungstag der Anmeldung:
**22.08.90 Patentblatt 90/34**

(84) Benannte Vertragsstaaten:
**AT BE CH DE ES FR GB GR IT LI LU NL SE**

(71) Anmelder: **Petz, Günter**
**Flachslander Strasse 8**

**D-8500 Nürnberg(DE)**

(72) Erfinder: **Petz, Günter**
**Flachslander Strasse 8**
**D-8500 Nürnberg(DE)**

(74) Vertreter: **Göbel, Matthias, Dipl.-Ing.**
**Pruppacher Hauptstrasse 5-7**
**D-8501 Pyrbaum-Pruppach(DE)**

(54) **Handstück für Mundduschen.**

(57) Bei einem Handstück für Mundduschen mit an einem Ventilkörper drehbar dicht und abnehmbar angesteckten Düsenrohr mit Einzelstrahl- und Mehrstrahlaustritten sowie einem am Ventilkörper angeordneten Stellschieber, der eine Regeleinrichtung zum wahlweise getrennten Anlegen eines gemeinsamen Zulaufs an getrennten Abläufen für den Einzelstrahlaustritt oder den Mehrstrahlaustritt bzw. zum Trennen der Strahlaustritte vom Zulauf betätigt, wobei die Abläufe durch verschiebliche Ventilstößel kontrollierbar sind, die durch am Stellschieber angeordnete Kurvenstücke in der Schließstellung haltbar und nacheinander unabhängig voneinander in die Offenstellung bringbar sind und bei dem der Stellschieber ein am Ventilkörper angeordnetes Sperrglied in den Offenstellungen der Ventilstößel in eine Ausnehmung des Düsenrohrs einschwenkt und in den Schließstellungen der Ventilstößel aus der Ausnehmung aushebt, ist zur Verringerung des baulichen Aufwands und zur sicheren Fixierung des Düsenrohres am Ventilkörper, der Ventilkörper (3) an dem dem Düsenrohr (2) zugenäherten Ende mit zwei diametral zueinander als Sperrglied dienende Zangen (13) versehen, die durch Vorspannung nach außen abspreizbar und durch den Stellschieber (10) entgegen der Spreizspannung zueinander verschwenkbar und mit angeformten Ansätzen (18) über Ausnehmungen (19) im Ventilkörper (3) in eine Ringnut (20) des Düsenrohrs (2) zur Arretierung desselben am Ventilkörper (3) gleichzeitig, gleichmäßig einschwenkbar sind.

Fig.2

EP 0 383 070 A2

## Handstück für Mundduschen

Die Erfindung betrifft ein Handstück für Mundduschen mit an einem Ventilkörper drehbar dicht und abnehmbar angesteckten Düsenrohr mit Einzelstrahl- und Mehrstrahlaustritten sowie einem am Ventilkörper angeordneten Stellschieber, der eine Regeleinrichtung zum wahlweise getrennten Anlegen eines gemeinsamen Zulaufs an getrennten Abläufen für den Einzelstrahlaustritt oder den Mehrstrahlaustritt bzw. zum Trennen der Strahlaustritte vom Zulauf betätigt, wobei die Abläufe durch verschiebliche Ventilstößel kontrollierbar sind, die durch am Stellschieber angeordnete Kurvenstücke in der Schließstellung haltbar und nacheinander unabhängig voneinander in die Offenstellung bringbar sind und bei dem der Stellschieber ein am Ventilkörper angeordnetes Sperrglied in den Offenstellungen der Ventilstößel in eine Ausnehmung des Düsenrohrs einschwenkt und in den Schließstellungen der Ventilstößel aus der Ausnehmung aushebt.

Zur Fixierung von Düsenrohren ist es bei Handstücken (DE-OS 3 304 092) dieser Art bekannt, einen in einer Ausnehmung quer zum Düsenrohr frei verschieblichen stiftförmigen Riegelkörper mittels des Stellschiebers zu übergreifen und in eine Ringnut des Düsenrohres zu halten. Der Riegelkörper führt jedoch zu komplizierten Montagen und ergibt durch den tangentialen Angriff am Düsenrohr keine sichere Fixierung desselben am Ventilkörper. Außerdem führt der einseitige Angriff des Riegelkörpers zu Verbiegungen des Düsenrohres und damit zu Undichtigkeiten der Verbindung desselben mit dem Ventilkörper. Außerdem ist es bekannt, zur Fixierung des Düsenrohres einen am Ventilgehäuse (EP-A1-0229 207) angelenkten Sperrhebel vorzusehen, der durch den Stellschieber mit einem Hebelarm in eine Ringnut des Düsenrohres einschwenkbar ist. Auch bei dieser Art der Fixierung des Düsenrohres ist die Halterung des Düsenrohres nur durch einseitige Einwirkung bewirkt und die Anlenkstelle für den Sperrhebel führt zu einem komplizierten Bauaufwand.

Es ist Aufgabe der Erfindung unter Verringerung des baulichen Aufwands die Fixierung des Düsenrohres am Ventilkörper sicherer zu machen.

Erfindungsgemäß ist hierzu vorgesehen, daß der Ventilkörper an dem dem Düsenrohr zugenährten Ende diametral zueinander zwei als Sperrglied dienende Zangen aufweist, die durch Vorspannung nach außen abspreizbar sind und durch den Stellschieber entgegen der Spreizspannung zueinander verschwenkbar sind und mit angeformten Ansätzen über Ausnehmungen im Ventilkörper in eine Ringnut des Düsenrohres zur Arretierung desselben am Ventilkörper gleichzeitig gleichmäßig einschwenkbar sind. Bevorzugt sind die beiden Zangen an einem Steg angeformt, der auf Halteleisten des Ventilkörpers aufsteckbar ist und bei dem die Zangen durch die Halteleisten axial und durch Eingreifen der Ansätze in die Ausnehmungen quer dazu fixierbar sind. Der diametrale Angriff beider Zangen am Düsenrohr führt zu einer sicheren Fixierung desselben am Ventilgehäuse und verhindert Verbiegungen desselben, was zu einer mechanischen Entlastung der Abdichtung des Düsenrohres am Ventilgehäuse Anlaß ist. Außerdem erweist sich die einstückige Ausbildung von Zangen und Steg und die einfache Festlegung derselben am Ventilgehäuse durch einen Verschiebevor gang als montagefreundlich, wobei die von den Werkstoffeigenschaften herleitbaren Spreizspannungen zu einer behinderungsfreien Freigabe des Düsenrohres in der Schließstellung der Ventilstößel sicher sorgen.

In Ausgestaltung des Handstückes ist vorgesehen, daß die freien Enden der Zangen zusätzlich zu den Ansätzen Winkelstücke aufweisen, die in mit Hinterschneidungen versehene Ausnehmungen am Ventilkörper eintauchen und zu Begrenzungen der Schwenkbewegungen der Zangen an den Hinterschneidungen abstützbar sind. Mittels der Winkelstücke sind die Abspreizungen der Zangen nach außen mit gleichen Winkelgraden begrenzt, wodurch die Zangen mit gleichen Schwenkbewegungen gleichzeitig in die Ringnut des Düsenrohres einbringbar sind.

Außerdem ist noch vorgesehen, daß der Stellschieber am Ventilkörper verschiebbar abgestützt und mittels hakenförmigen Ansätzen Längsleisten des Ventilkörpers unterfaßt und vermittels an einem Ende angeordneten axialen leistenförmigen Fortsätzen in den Schwenkweg der Zangen einschiebbar ist. Abgesehen davon, daß durch die vorgeschlagene Ausbildung des Stellschiebers dieser durch einen Steckvorgang mit dem Ventilgehäuse verbindbar ist, sorgen die Fortsätze für eine sichere Abschwenkung der Zangen. Von Vorteil ist, wenn die Fortsätze mindestens über eine Teillänge quer zur Längsachse des Stellschiebers abgesetzt sind, wodurch ein federnd nachgiebiges Zusammenwirken der Fortsätze mit den Zangen erzielt ist, was sich insbesondere dann von Vorteil zeigt, wenn den Ansätzen der Zangen die Ringnut des Düsenkörpers nicht exakt gegenüber gestellt ist, was beispielsweise bei ungenauem und ungenügendem Einführen des Düsenrohres in die Aufnahmeöffnung des Ventilkörpers der Fall ist.

Die Erfindung ist anhand eines Ausführungsbeispiels in der Zeichnung verdeutlicht. Es zeigen:

Fig. 1 ein Handstück in Seitenansicht, verkleinert,

Fig. 2 ein Ventilgehäuse mit Stellschieber in Ruhestellung in Draufsicht,

Fig. 3 ein Ventilgehäuse mit Stellschieber in einer Arbeitsstellung in Draufsicht,

Fig. 4 einen Schnitt eines Stellschiebers,

Fig. 5 einen weiteren Schnitt eines Stellschiebers,

Fig. 6 Zangen in Draufsicht, vergrößert,

Fig. 7 einen Schnitt nach der Linie VII-VII der Fig. 6,

Fig. 8 einen Ventilstößel in Seitenansicht und

Fig. 9 einen Schnitt nach der Linie IX-IX der Fig. 2

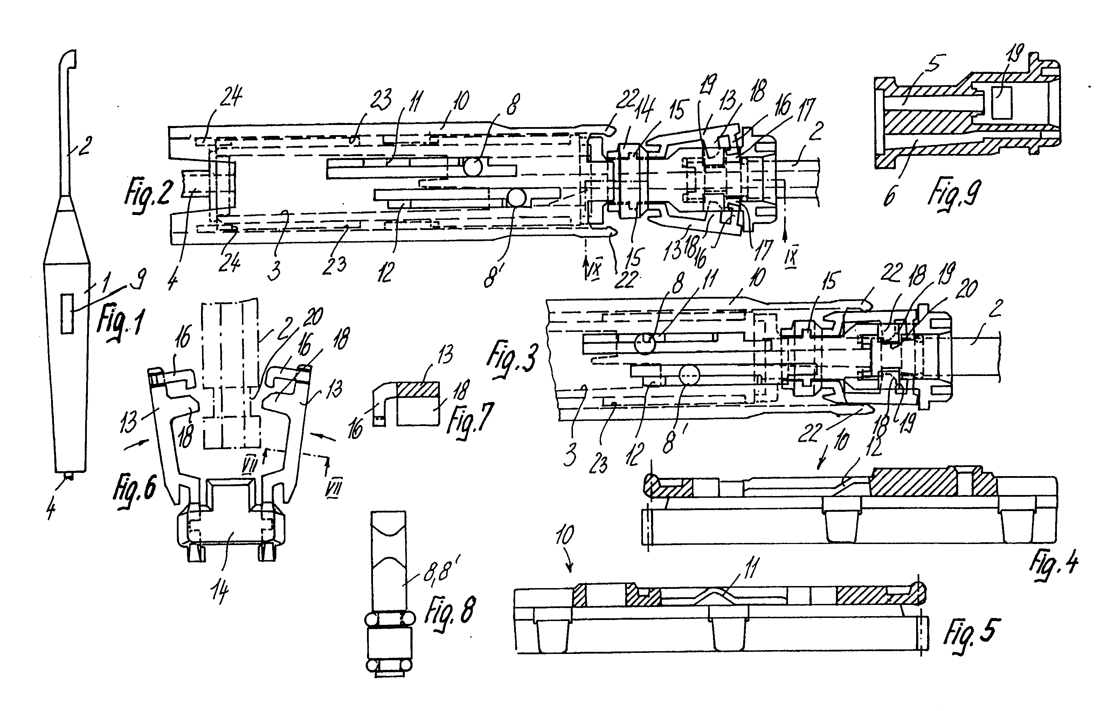

In der Fig. 1 ist das Gehäuse des Handstücks mit 1 und mit 2 ein ansteckbares Düsenrohr bezeichnet. Das Gehäuse 1 nimmt einen Ventilkörper 3 auf. der einen Zulauf 4 und getrennte Abläufe 5 und 6 (Fig. 9) zum Düsenrohr 2 aufweist. Die Abläufe 5, 6 sind durch Ventilstößel 8,8' (Fig. 7) kontrollierbar, die vermittels eines durch ein Betätigungsglied 9 bewegbaren Stellschiebers 10 mit Kurvenstücken 11 und 12 im Ventilkörper 3 verschiebbar sind. Der Ventilkörper 3 trägt Zangen 13, die beide durch einen Steg 14 miteinander verbunden, bevorzugt einstückig ausgeformt sind und mittels des Stegs 14 auf Halteleisten 15 des Ventilkörpers 3 steckbar gehalten sind. Die Zangen 13 sind durch Werkstoffspannungen nach außen mit Vorspannung abspreizbar, wobei die Abspreizung der Zangen 13 durch mit den Zangen verbundene Winkelstücke 16, die Hinterschneidungen von Ausnehmungen 17 des Ventilkörpers 3 hintergreifen, begrenzbar sind. Außerdem tragen die Zangen 13 Ansätze 18, die über Ausnehmungen 19 des Ventilkörpers 3 in die Ringnut 20 des Düsenrohres 2 mittels des Stellschiebers 10 entgegen der Wirkung der Spreizspannungen einschwenkbar sind. Der Stellschieber 10 ist mit leistenförmigen Fortsätzen 22 versehen, die durch Auflaufen auf die Außenflächen der Zangen 13 deren Abschwenkung aus der in der Fig. 2 gezeigten Stellung in die Stellung der Fig. 3 bewirken. Der Stellschieber 10 ist auf dem Ventilkörper 3 aufgelegt und durch Unterfassen von ventilkörperfesten Leisten 23 mittels Ansätzen 24 gehalten.

In Fig. 2 befindet sich der Stellschieber 10 in der Schließstellung der Ventilstößel 8, 8'. In dieser Stellung ist der Zulauf 4 von den Abläufen 5, 6 getrennt. Durch Längsbewegen des Stellschiebers 10 in Richtung auf die rechte Blattseite wird zunächst der Ventilstößel 8 über das Kurvenstück 11 angelüftet und der Zulauf 4 mit dem Ablauf 5 (Fig.9) in Verbindung gebracht. Außerdem sind die Fortsätze 22 über die Zangen 13 geführt und diese mit ihren Ansätzen 18 in die Ringnut 20 des Düsenrohres 2 eingebracht, wodurch eine Festlegung des Düsenrohres 2 am Ventilkörper bewirkt ist. Bei weiterem Längsbewegen des Stellschiebers 10 gibt das Kurvenstück 11 den Ventilstößel 8 frei und mit dem Kurvenstück 12 kommt der Ventilstößel 8' zur Wirkung, der den Zulauf 4 an den Ablauf 6 anlegt, während der Ablauf 5 geschlossen ist. In dieser Stellung verbleiben die Fortsätze 22 auf den Zangen 13 und das Düsenrohr 2 ist weiter am Ventilkörper 3 festgelegt. Bei Rückführung des Stellschiebers 10 in Fig.2 sind die Zangen 13 abgespreizt und die Ventilstößel 8, 8' in ihre Schließstellungen gebracht.

## Ansprüche

1. Handstück für Mundduschen mit an einem Ventilkörper drehbar dicht und abnehmbar angesteckten Düsenrohr mit Einzelstrahl-und Mehrstrahlaustritten sowie einem am Ventilkörper angeordneten Stellschieber, der eine Regeleinrichtung zum wahlweise getrennten Anlegen eines gemeinsamen Zulaufs an getrennten Abläufen für den Einzelstrahlaustritt oder den Mehrstrahlaustritt bzw. zum Trennen der Strahlaustritte vom Zulauf betätigt, wobei die Abläufe durch verschiebliche Ventilstößel kontrollierbar sind, die durch am Stellschieber angeordnete Kurvenstücke in der Schließstellung haltbar und nacheinander unabhängig voneinander in die Offenstellung bringbar sind und bei dem der Stellschieber ein am Ventilkörper angeordnetes Sperrglied in den Offenstellungen der Ventilstößel in eine Ausnehmung des Düsenrohrs einschwenkt und in den Schließstellungen der Ventilstößel aus der Ausnehmung aushebt,dadurch gekennzeichnet,daß der Ventilkörper (3) an dem dem Düsenrohr (2) zugenäherten Ende diametral zueinander zwei als Sperrglied dienende Zangen (13) aufweist, die durch Vorspannung nach aussen abspreizbar sind und durch den Stellschieber (10) entgegen der Spreizspannung zueinander verschwenkbar sind und mit angeformten Ansätzen (18) über Ausnehmungen (19) im Ventilkörper (3) in eine Ringnut (20) des Düsenrohrs (2) zur Arretierung desselben am Ventilkörper (3) gleichzeitig, gleichmäßig einschwenkbar sind.

2. Handstück nach Anspruch 1, dadurch gekennzeichnet, daß die beiden Zangen (13) an einem Steg (14) angeformt sind, der auf Halteleisten (15) des Ventilkörpers (3) aufsteckbar ist und daß die Zangen (13) durch die Halteleisten (15) axial und durch Eingreifen der Ansätze (18) in die Ausnehmungen (19) quer dazu am Ventilkörper (3) fixierbar sind.

3. Handstück nach Anspruch 1, dadurch gekennzeichnet, daß die freien Enden der Zangen (13) zusätzlich zu den Ansätzen (18) Winkelstücke (16) aufweisen, die in mit Hinterschneidungen versehene Ausnehmungen (17) am Ventilkörper (3) eintauchen und zu Begrenzungen der Schwenkbewegungen der Zangen an den Hinterschneidungen abstützbar sind.

4. Handstück nach Anspruch 1, dadurch gekennzeichnet, daß der Stellschieber (10) am Ventilkörper (3) abstützbar und mittels hakenförmigen Ansätzen (24) Längsleisten (23) des Ventilkörpers (3) unterfaßt und vermittels an einem Ende angeordneten axialen leistenförmigen Fortsätzen (22) in den Schwenkweg der Zangen (13) einschiebbar ist.

5. Handstück nach Anspruch 4, dadurch gekennzeichnet, daß die Fortsätze (22) mindestens über eine Teillänge quer zur Längsachse des Stellschiebers 10) abgesetzt sind.

EP 0 383 070 A2

Fig.1

Fig.2

Fig.3

Fig.4

Fig.5

Fig.6

Fig.7

Fig.8

Fig.9